(19) Europäisches Patentamt
European Patent Office
Office européen des brevets

(11) EP 4 624 511 A1

(12) **EUROPEAN PATENT APPLICATION**
published in accordance with Art. 153(4) EPC

(43) Date of publication:
**01.10.2025 Bulletin 2025/40**

(21) Application number: **24738666.7**

(22) Date of filing: **02.01.2024**

(51) International Patent Classification (IPC):
***C08G 63/06*** *(2006.01)* ***C08G 63/78*** *(2006.01)*
***C08G 63/80*** *(2006.01)* ***C08G 63/82*** *(2006.01)*

(52) Cooperative Patent Classification (CPC):
**C08G 63/06; C08G 63/78; C08G 63/80; C08G 63/82**

(86) International application number:
**PCT/KR2024/000032**

(87) International publication number:
**WO 2024/147595 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.01.2023 KR 20230000713**
**07.02.2023 KR 20230016271**
**27.12.2023 KR 20230193117**

(71) Applicant: **LG CHEM, LTD.**
**Seoul 07336 (KR)**

(72) Inventors:
- **LEE, Yeonju**
**Daejeon 34122 (KR)**
- **KIM, Yulliana**
**Daejeon 34122 (KR)**
- **CHOE, Dongcheol**
**Daejeon 34122 (KR)**
- **JEONG, Cheolhwan**
**Daejeon 34122 (KR)**
- **HA, Myeongjin**
**Daejeon 34122 (KR)**
- **KIM, Kyeongmin**
**Daejeon 34122 (KR)**
- **KIM, Woojung**
**Daejeon 34122 (KR)**
- **KIM, Chul Woong**
**Daejeon 34122 (KR)**

(74) Representative: **Plasseraud IP**
**104 Rue de Richelieu**
**CS92104**
**75080 Paris Cedex 02 (FR)**

(54) **POLY(3-HYDROXYPROPIONIC ACID) AND PREPARATION METHOD THEREOF**

(57) The present disclosure prepares a poly(3-hydroxypropionic acid) by subjecting 3-hydroxypropionic acid to condensation polymerization under specific conditions, thereby making it possible to prepare a poly(3-hydroxypropionic acid) having a high molecular weight as well as having a low ratio of a vinyl group in end groups.

EP 4 624 511 A1

## Description

## FIELD OF THE INVENTION

CROSS-REFERENCE TO RELATED APPLICATION(S)

This application claims priority to and the benefit of Korean Patent Application No. 10-2023-0000713, filed on January 3, 2023, Korean Patent Application No. 10-2023-0016271, filed on February 7, 2023, and Korean Patent Application No. 10-2023-0193117, filed on December 27, 2023, with the Korean Intellectual Property Office, the disclosures of which are incorporated herein by reference in their entirety.

The present disclosure relates to a poly(3-hydroxypropionic acid) having a high molecular weight as well as having a low ratio of a vinyl group in end groups and a method for preparing the same

## BACKGROUND OF THE INVENTION

Poly(3-hydroxypropionic acid) has biodegradable properties, and due to these eco-friendly properties, research using the same has been actively conducted in recent years.

The method for preparing poly(3-hydroxypropionic acid) can be broadly classified into two types: one is a petrochemical-based polymerization method using β-propiolactone (PL), and the other is a bio-based method using 3-hydroxypropionic acid(3HP).

When PL is used, it must go through several synthesis steps using ethylene oxide, which is disadvantageous in terms of economic efficiency compared to when 3HP is used. In addition, poly(3-hydroxypropionic acid) prepared using PL has a bio content of 0% and, particularly, an acrylic acid series having a vinyl group is used as an initiator, which causes a problem that the ratio of a vinyl group in end groups is high.

In the case of polymerization using the biosynthesis of 3HP, it must go through several steps such as freeze-drying, ultrasonication, and elution using a solvent to obtain poly(3-hydroxypropionic acid), and in this case, a large amount of solvent must be used. In the case of biosynthesis polymerized in this way, the bio content of poly(3-hydroxypropionic acid) is 100%, but due to the residues remaining after fermentation, poly(3-hydroxypropionic acid) contains a large amount of organic nitrogen and has a high yellow index(YI).

In order to solve this problem, attempts have been made to subject 3HP to condensation polymerization, but there is a limitation in obtaining poly(3-hydroxypropionic acid) with a high molecular weight due to byproducts in the form of cyclic oligomers. Attempts have been made to increase the molecular weight by subjecting cyclic oligomers with a low molecular weight to ring-opening polymerization(ROP), but there are difficulties in separation and purification.

Therefore, there is a need to develop a method of preparing a poly(3-hydroxypropionic acid) by condensation polymerization of 3HP, and also preparing poly(3-hydroxypropionic acid) having a high molecular weight as well as having a low ratio of a vinyl group in end groups.

## SUMMARY OF THE INVENTION

## TECHNICAL PROBLEM

It is an object of the present disclosure to provide a poly(3-hydroxypropionic acid) having a high molecular weight as well as having a low ratio of a vinyl group in end groups.

It is another object of the present disclosure to provide a method for preparing a poly(3-hydroxypropionic acid).

## TECHNICAL SOLUTION

In order to achieve the above object, provided herein is a poly(3-hydroxypropionic acid) comprising a repeating unit represented by the following Chemical Formula 1, wherein the poly(3-hydroxypropionic acid) has a ratio of a vinyl group in end groups of 40 mol% or less:

[Chemical Formula 1]

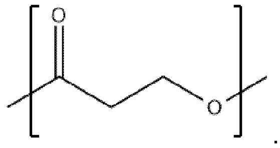

The term 'poly(3-hydroxypropionic acid)' as used herein includes a repeating unit derived from 3-hydroxypropionic acid, and specifically, it means a polymer including the repeating unit represented by Chemical Formula 1.
Poly(3-hydroxypropionic acid) has biodegradable properties due to the molecular structure of the repeating unit. Furthermore, the poly(3-hydroxypropionic acid) according to the present disclosure is prepared by subjecting 3-hydroxypropionic acid to condensation polymerization under specific conditions as described below, whereby the poly(3-hydroxypropionic acid) is characterized in that the ratio of a vinyl group in end groups is 40 mol% or less.
Poly(3-hydroxypropionic acid) may have a hydroxyl group, a carboxyl group, a vinyl group, etc. in the end groups, but as in the preparation method of the present disclosure described below, since poly(3-hydroxypropionic acid) is prepared by condensation polymerization from 3-hydroxypropionic acid, there is a low possibility that a vinyl group will exist in the end group of poly(3-hydroxypropionic acid) compared to a conventional method for preparing a poly(3-hydroxypropionic acid) from β-propiolactone. The vinyl group is generated due to a side reaction that occurs during the polymerization of 3-hydroxypropionic acid into poly(3-hydroxypropionic acid), wherein the vinyl group acts as a factor that breaks the equivalent ratio in condensation polymerization, where the equivalent ratio of each functional group (hydroxyl group, carboxyl group) is important, thereby inhibiting the reaction rate and making it difficult to obtain a polymer with a high molecular weight. Furthermore, if a vinyl group exists in poly(3-hydroxypropionic acid), there is a problem that chain extension of poly(3-hydroxypropionic acid) through further modification does not favorably occur. Therefore, since the poly(3-hydroxypropionic acid) of the present disclosure has a small number of vinyl groups in the end groups, it has the advantage that the above-mentioned drawbacks are fundamentally reduced.
Preferably, the poly(3-hydroxypropionic acid) has a ratio of a vinyl group in end groups of 40 mol% or less, 39 mol% or less, 38 mol% or less, 37 mol% or less, 36 mol% or less, 35 mol% or less, 30 mol% or less, 25 mol% or less, 20 mol% or less, 15 mol% or less, 10 mol% or less, 8 mol% or less, or 6 mol% or less. Further, the poly(3-hydroxypropionic acid) is more excellent as the ratio of a vinyl group in end groups is lower. As an example, the poly(3-hydroxypropionic acid) has a ratio of a vinyl group in end groups of 0.1 mol% or more, 0.2 mol% or more, 0.3 mol% or more, 0.4 mol% or more, or 0.5 mol% or more.
The vinyl group content of the poly(3-hydroxypropionic acid) can be determined by calculating the ratio of a vinyl group to total end groups through 1H-NMR measurement using NMR (Buker 500MHz NMR model equipment). Specifically, the polymer can be dissolved in d-$CDCl_3$ at a concentration of 8 mg/ml and measured, and calculated according to the following Mathematical Equation 1

[Mathematical Equation 1]

$$vinyl\ group(\%) = \frac{2a}{(2a+b)} \times 100$$

in Mathematical Equation 1,

a is the area value of $^1H$ in C=C of 6.3 ppm,
b is the area value of $^2H$ in HO-$CH_2$- of 3.8 ppm.

The area value of $^1H$ in C=C is the area value of hydrogen on the side closer to the carbonyl group among hydrogens(H) of the double bond of the vinyl group, and the area value of $^2H$ in HO-$CH_2$- may be the area value of two hydrogens substituted on the carbon connected to the end of the hydroxyl group.
That is, a poly(3-hydroxypropionic acid) according to the present disclosure is prepared by subjecting 3-hydroxypropionic acid to condensation polymerization under specific conditions, thereby making it possible to prepare a poly(3-hydroxypropionic acid) having a high molecular weight as well as having a low ratio of a vinyl group in end groups.
Further, the poly(3-hydroxypropionic acid) may have a nitrogen content of 100 ppm or less. For example, the poly(3-hydroxypropionic acid) may have a nitrogen content of 80 ppm or less, 60 ppm or less, 50 ppm or less, 40 ppm or less, 38 ppm or less, 35 ppm or less, 33 ppm or less, 30 ppm or less, 1 ppm or more and 29 ppm or less, 3 ppm or more and

28 ppm or less.

Further, the poly(3-hydroxypropionic acid) may have a YI (yellow index) value of 30 or less. For example, the poly(3-hydroxypropionic acid) may have a YI (yellow index) value of 28 or less, 27 or less, 25 or less, 23 or less, 20 or less, 19 or less, 18 or less, 17 or less, 15 or less, 13 or less, 12 or less, and 1 or more, 2 or more, or 3 or more. The YI (yellow index) value of the poly(3-hydroxypropionic acid) may be a YI value measured for a film produced using the poly(3-hydroxypropionic acid), wherein the thickness of the film may be, for example, 180 um.

**In** the case of polymerization using the biosynthesis of 3-hydroxypropionic acid, there is a problem that it must go through several steps such as freeze-drying, ultrasonication, and elution using a solvent, and that due to the residues remained after fermentation, it contains a large amount of organic nitrogen and has a high YI value. However, the poly(3-hydroxypropionic acid) according to the present disclosure is prepared by condensation polymerization of 3-hydroxypropionic acid under specific conditions, and thus is characterized in that it does not require a purification process unlike biosynthesis, and prepares a poly(3-hydroxypropionic acid) having both a low nitrogen content and a low YI, and also having a high molecular weight as well as having a low ratio of a vinyl group in the end groups as described above.

Further, the poly(3-hydroxypropionic acid) according to the present disclosure can be prepared from 3-hydroxypropionic acid, wherein the 3-hydroxypropionic acid can be prepared through biosynthesis. Therefore, the poly(3-hydroxypropionic acid) may have a bio carbon content of 80 wt.% or more. For example, the poly(3-hydroxypropionic acid) may have a bio carbon content of 85 wt.% or more, 90 wt.% or more, 95 wt.% or more and 100 wt.% or less, or 100 wt.%.

The content of the bio carbon means the content of bio carbon based on the total carbon content contained in poly(3-hydroxypropionic acid). As this value is higher, it may correspond to an eco-friendly compound. The measurement method may include, for example, making the carbon atoms contained in the compound to be measured into graphitized or carbon dioxide gas form and measuring them by the ASTM D6866-22 method and a mass spectrometer, or measuring them according to liquid scintillation spectrometry. At this time, an accelerator for separating 14C ions from 12C ions may be used together with the mass spectrometer, etc., to separate the two isotopes and measure the content and content ratio by a mass spectrometer.

Preferably, the weight average molecular weight of the poly(3-hydroxypropionic acid) according to the present disclosure is 10,000 to 700,000. More preferably, the weight average molecular weight of the poly(3-hydroxypropionic acid) according to the present disclosure is 10,000 or more, 13,000 or more, 15,000 or more, 17,000 or more, or 20,000 or more, and 650,000 or less, 630,000 or less, 600,000 or less, 580,000 or less, 550,000 or less, 530,000 or less, 500,000 or less, 450,000 or less, 400,000 or less, 380,000 or less, 350,000 or less, or 300,000 or less.

Preferably, the number average molecular weight of the poly(3-hydroxypropionic acid) according to the present disclosure is 7,000 to 500,000. More preferably, the number average molecular weight of the poly(3-hydroxypropionic acid) according to the present disclosure is 7,000 or more, 8,000 or more, 9,000 or more, 10,000 or more, or 11,000 or more, and 450,000 or less, 400,000 or less, 380,000 or less, 360,000 or less, 350,000 or less, 330,000 or less, 300,000 or less, 200,000 or less, 150,000 or less, 130,000 or less, or 100,000 or less.

Also, preferably, the molecular weight distribution(Mw/Mn) of the poly(3-hydroxypropionic acid) according to the present disclosure is 1.2 to 3.5. More preferably, the molecular weight distribution of the poly(3-hydroxypropionic acid) according to the present disclosure is 1.2 or more, 1.3 or more, 1.4 or more, 1.5 or more, 1.6 or more, 1.7 or more, 1.8 or more, 1.9 or more, or 2.0 or more, and 3.4 or less, 3.3 or less, 3.2 or less, 3.1 or less, or 3.0 or less.

According to another embodiment of the disclosure, there is provided a method for preparing a poly(3-hydroxypropionic acid), comprising a step of polymerizing 3-hydroxypropionic acid at a temperature of 100°C or less to prepare a poly(3-hydroxypropionic acid),

wherein the poly(3-hydroxypropionic acid) has a ratio of a vinyl group in end groups of 40 mol% or less.

In the above-mentioned method for preparing a poly(3-hydroxypropionic acid), 3-hydroxypropionic acid can be polymerized at a temperature of 100°C or less, 95°C or less, 90°C or less, 85°C or less, 80°C or less, 75°C or less, or 70°C or less to prepare a poly(3-hydroxypropionic acid), and this poly(3-hydroxypropionic acid) may be the poly(3-hydroxypropionic acid) according to one embodiment.

The polymerization may be a solid state polymerization which is carried out at a temperature of 70°C or less. For example, 3-hydroxypropionic acid may be subjected to solid state polymerization at a temperature of 70°C or less to prepare the poly(3-hydroxypropionic acid).

The present inventors have confirmed that, when 3-hydroxypropionic acid is subjected to solid state polymerization while lowering to a crystallization temperature or less, for example, lowering to a temperature of 70°C or less, to induce crystallization, it is possible to prepare a poly(3-hydroxypropionic acid) while minimizing side reactions, and the prepared poly(3-hydroxypropionic acid) has a low ratio of a vinyl group in the end groups, and also has a low yellow index(YI) value and nitrogen content.

The solid state polymerization may be carried out at a temperature equal to or lower than the crystallization temperature of 3-hydroxypropionic acid, for example, 70°C or less, 65°C or less, 60°C or less, 55°C or less, or 50°C or less, and 25°C or more, 30°C or more, 35°C or more, or 40°C or more.

Further, the solid state polymerization may comprise,

(step 1) subjecting 3-hydroxypropionic acid to solid state polymerization at a temperature of 70°C or less to prepare an oligomer; and

(step 2) subjecting the oligomer to solid state polymerization at a temperature of 70°C or less to prepare a poly(3-hydroxypropionic acid).

The step 1 may be a step of subjecting 3-hydroxypropionic acid to solid state polymerization at a temperature of 70°C or less to prepare an oligomer. The solid state polymerization is carried out at a temperature equal to or lower than the crystallization temperature of 3-hydroxypropionic acid, for example, a temperature of 70°C or less, so that the reactant 3-hydroxypropionic acid and the product 3-hydroxypropionic acid oligomer can maintain a solid state. For example, the solid state polymerization of the step 1 may be carried out at a temperature of 70°C or less, 65°C or less, 60°C or less, 55°C or less, or 50°C or less, and may be carried out at a temperature of 25°C or more, 30°C or more, 35°C or more, or 40°C or more.

The oligomer prepared in the step 1 may have a weight average molecular weight of 1,000 or more and 20,000 or less. Preferably, the weight average molecular weight of the oligomer may be 1,500 or more, 2,000 or more, 2,500 or more, or 3,000 or more, and 15,000 or less, 10,000 or less, 9,000 or less, 8,000 or less, or 70,000 or less.

The step 1 can be carried out at a pressure of 1 torr or more and 200 torr or less for 1 hour or more and 10 hours or less. For example, the step 1 may be carried out under a pressure of 1 torr or more, 5 torr or more, 7 torr or more, or 10 torr or more, and 200 torr or less, 150 torr or less, 100 torr or less, 70 torr or less, or 50 torr or less. Further, the reaction time of the step 1 can be appropriately determined in consideration of the molecular weight, yield, etc. of the prepared oligomer, and preferably, the reaction is carried out for 1 hour to 10 hours, 2 hours to 8 hours, or 3 hours to 5 hours.

The step 2 may comprise a step of subjecting the oligomer to solid state polymerization to prepare the poly(3-hydroxypropionic acid).

Further, the step 2 may be carried out at a temperature of 70°C or less under a pressure of 0.01 torr or more and 5.00 torr or less for 20 hours or more and 100 hours or less. For example, the reaction temperature of the step 2 may be 70°C or less, 65°C or less, 60°C or less, 55°C or less, 50°C or less, and 25°C or more, 30°C or more, 35°C or more, 40°C or more. Further, the pressure of the step 2 may be 5.00 torr or less, 4.00 torr or less, 3.00 torr or less, 2.00 torr or less, 1.00 torr or less, 0.50 torr or less, 0.40 torr or less, or 0.30 torr or less, and 0.01 torr or more, 0.02 torr or more, 0.03 torr or more, 0.04 torr or more, 0.05 torr or more, 0.06 torr or more, 0.07 torr or more, 0.08 torr or more, 0.09 torr or more, or 0.10 torr or more. The reaction time of the step 2 may be appropriately determined in consideration of the molecular weight, yield, etc. of the prepared polymer, and preferably, the reaction is carried out for 30 to 90 hours, 40 to 80 hours, or 50 to 70 hours.

Meanwhile, since the step 2 is carried out subsequent to the step 1, the catalyst added in the step 1 can also participate in the reaction even in the step 2.

Further, there is provided a preparation method comprising (step A) melt polymerizing 3-hydroxypropionic acid to prepare a 3-hydroxypropionic acid oligomer; and (step B) polymerizing the 3-hydroxypropionic acid oligomer prepared in the step A. At this time, the above-mentioned poly(3-hydroxypropionic acid) can be prepared by adjusting the preparation conditions of the steps A and B.

The step A is a step of melt polymerizing 3-hydroxypropionic acid to prepare a 3-hydroxypropionic acid oligomer. The melt polymerization means that the reactant 3-hydroxypropionic acid and the product 3-hydroxypropionic acid oligomer maintain a liquid state, and in particular, the reaction temperature is adjusted to a temperature of 100°C or less, 80°C to 100°C. Preferably, the reaction temperature of the step A is 81°C or more, 82°C or more, 83°C or more, 84°C or more, or 85°C or more, and 99°C or less, 98°C or less, 97°C or less, 96°C or less, or 95°C or less. Further, the step A is carried out under a pressure of 5 torr to 20 torr. Preferably, the step A is carried out under a pressure of 6 torr or more, 7 torr or more, 8 torr or more, or 9 torr or more, and 19 torr or less, 18 torr or less, 17 torr or less, 16 torr or less, or 15 torr or less. Further, the reaction time of the step A can be appropriately determined in consideration of the molecular weight, yield, etc. of the prepared 3-hydroxypropionic acid oligomer, and preferably, the reaction is carried out for 1 to 3 hours.

**The** step B of the present disclosure is a step of further polymerizing the 3-hydroxypropionic acid oligomer prepared in the step A to prepare a poly(3-hydroxypropionic acid). Since the reactant is an oligomer unlike the step A, the step B is carried out at a lower pressure. In particular, the vinyl group content of the final prepared poly(3-hydroxypropionic acid) is affected by the reaction conditions of the step B, whereby the reaction temperature, reaction pressure and reaction time of the step B are adjusted to thereby prepare poly(3-hydroxypropionic acid) having a high molecular weight while reducing the vinyl group content.

Preferably, the reaction temperature of the step B is 100°C or less, 75°C to 95°C. If the reaction temperature is less than 75°C, the polymerization does not favorably proceed, which causes a problem that the molecular weight of the poly(3-hydroxypropionic acid) decreases, and if the reaction temperature is more than 100°C, there is a problem that a poly(3-hydroxypropionic acid) having a high vinyl group content is prepared. More preferably, the reaction temperature of the step B is 80°C or more, or 85°C or more, and 94°C or less, 93°C or less, 92°C or less, or 91°C or less.

Preferably, the reaction pressure of the step B is 5 mbar or less. More preferably, the pressure of the step B is 4 mbar or less, 3 mbar or less, 2 mbar or less, 1 mbar or less, 0.5 mbar or less, 0.4 mbar or less, or 0.3 mbar or less, and 0.01

mbar or more, 0.02 mbar or more, 0.03 mbar or more, 0.04 mbar or more, 0.05 mbar or more, 0.06 mbar or more, 0.07 mbar or more, 0.08 mbar or more, 0.09 mbar or more, or 0.1 mbar or more.

The reaction time of the step B can be appropriately determined in consideration of the molecular weight, yield, etc. of the poly(3-hydroxypropionic acid) produced, and preferably, the reaction is carried out for 5 to 30 hours. Within the above reaction time, the molecular weight of the poly(3-hydroxypropionic acid) can be increased to an appropriate level, and the production yield can also be improved. More preferably, the reaction time of the step B is 12 to 28 hours.

Meanwhile, since the step B is carried out subsequent to the step A, the catalyst added in the step A also participates in the reaction even in the step B. Therefore, the catalyst described in the previous step A can also be applied in step B.

The polymerization is carried out in the presence of a catalyst, and the catalyst may be used in an amount of 0.4 mol% or less based on the 3-hydroxypropionic acid. For example, the catalyst may be used in an amount of 0.01 mol% or more, 0.02 mol% or more, 0.03 mol% or more, 0.04 mol% or more, 0.05 mol% or more and 0.4 mol% or less based on the 3-hydroxypropionic acid. If the amount of the catalyst used is too small, the polymerization does not favorably proceed, which cases a problem that the molecular weight of the poly(3-hydroxypropionic acid) is reduced, and if the amount of the catalyst used is too large, there is a problem that a poly(3-hydroxypropionic acid) having a high vinyl group content is prepared.

The catalyst may be a sulfonic acid-based catalyst, a tin-based catalyst, a titanium-based catalyst, etc., and for example, only a sulfonic acid-based catalyst may be used, but is not limited thereto. The sulfonic acid-based catalyst may be p-toluenesulfonic acid(p-TSA), methanesulfonic acid(MsOH), m-xylene-4-sulfonic acid, 2-mesitylenesulfonic acid, or p-xylene-2-sulfonic acid(p-XSA).

In the method for preparing a poly(3-hydroxypropionic acid) according to the other embodiment, 3-hydroxypropionic acid is subjected to solid state polymerization at a temperature of 70°C or less and a polymerization catalyst is used in an amount of 0.4 mol% or less based on 3-hydroxypropionic acid, so that the finally prepared poly(3-hydroxypropionic acid) can have a ratio of vinyl groups in end groups of 40 mol% or less.

Further, in the method for preparing a poly(3-hydroxypropionic acid), 3-hydroxypropionic acid is subjected to melt polymerization at a temperature of 100°C or less, and a polymerization catalyst is used in an amount of 0.4 mol% or less based on 3-hydroxypropionic acid, so that the finally prepared poly(3-hydroxypropionic acid) may have a ratio of a vinyl group in end groups of 40 mol% or less.

Further, before the step of polymerizing 3-hydroxypropionic acid at a temperature of 100°C or less to prepare a poly(3-hydroxypropionic acid), the method may comprise a step of drying the 3-hydroxypropionic acid. For example, the drying temperature may be 50°C or more, 60°C or more, 70°C or more, 80°C or more, or 90°C or more, and 150°C or less, 140°C or less, 130°C or less, 120°C or less, or 110°C or less. Further, the drying may be carried out under a pressure of 10 torr or more, 20 torr or more, 30 torr or more, or 40 torr or more, and 760 torr or less, 500 torr or less, 400 torr or less, 300 torr or less, or 200 torr or less.

## ADVANTAGEOUS EFFECTS

As described above, according to the present disclosure, a poly(3-hydroxypropionic acid) is prepared by subjecting 3-hydroxypropionic acid to condensation polymerization under specific conditions, thereby making it possible to prepare a poly(3-hydroxypropionic acid) having a high molecular weight as well as having a low ratio of a vinyl group in the end groups.

## DETAILED DESCRIPTION OF THE EMBODIMENTS

Hereinafter, embodiments of the present disclosure will be explained in detail with reference to examples. However, the following examples are for illustrative purposes only, and the detailed description of the present disclosure is not limited by these examples.

### Example 1

### (Step 1)

3-Hydroxypropionic acid (60 g) from which moisture was removed was placed in a reactor, and p-TSA (p-toluenesulfonic acid) as a catalyst was added at 0.2 mol% based on 3-hydroxypropionic acid. The temperature and pressure inside the reactor were maintained at 90°C and 10 torr, respectively, and a melt polymerization reaction was performed for 2 hours to produce a 3-hydroxypropionic acid oligomer.

**(Step 2)**

Then, the temperature and pressure in the reactor were adjusted to 80°C and 0.2 torr, respectively, and the oligomer was reacted for 24 hours to prepare a poly(3-hydroxypropionic acid).

**Examples 2 to 10**

Poly(3-hydroxypropionic acid) was prepared by the same melt polymerization method as in Example 1, except that the reaction conditions were changed as shown in Table 1 below.

**Example 11**

15 g of 3-hydroxypropionic acid and 63.3 mg of p-toluenesulfonic acid(p-TSA) catalyst (0.2 mol% based on 3-hydroxypropionic acid) were charged into an oil bath reactor, and a solid state polymerization reaction was carried out at 70°C and 10 torr for 2 hours, followed by a solid state polymerization reaction at 70°C and 0.2 torr for 60 hours to obtain poly(3-hydroxypropionic acid).

**Example 12**

15 g of 3-hydroxypropionic acid and 126.6 mg of p-toluenesulfonic acid(p-TSA) catalyst (0.4 mol% based on 3-hydroxypropionic acid) were charged into an oil bath reactor, and a solid state polymerization reaction was carried out at 70°C and 10 torr for 2 hours, followed by a solid state polymerization reaction at 70°C and 0.2 torr for 60 hours to obtain poly(3-hydroxypropionic acid).

**Example 13**

15 g of 3-hydroxypropionic acid and 32.01 mg of methanesulfonic acid (0.2 mol% based on 3-hydroxypropionic acid) were charged into an oil bath reactor, and a solid state polymerization reaction was carried out at 70°C and 10 torr for 2 hours, followed by additional reaction at 70°C and 0.2 torr for 2 hours. After that, the temperature was lowered to room temperature to induce crystallization, and the crystallized reactant was subjected to solid state polymerization at 70°C and 0.2 torr for 60 hours to obtain poly(3-hydroxypropionic acid).

**Example 14**

15 g of 3-hydroxypropionic acid and 64.02 mg of methanesulfonic acid (0.4 mol% based on 3-hydroxypropionic acid) were charged into an oil bath reactor, and a solid state polymerization reaction was carried out at 70°C and 10 torr for 2 hours, followed by additional reaction at 70°C and 0.2 torr for 2 hours. After that, the temperature was lowered to room temperature to induce crystallization, and the crystallized reactant was subjected to solid state polymerization at 70°C and 0.2 torr for 60 hours to obtain poly(3-hydroxypropionic acid).

**Comparative Example 1**

β-Propiolactone (19.4 ml) was added to a reactor, and then acrylic acid (10 uL, 0.05 mol%) and $Sn(Oct)_2$ (9 uL, 0.01 mol%) were added thereto, and the mixture was reacted at 100°C for 1 hour to prepare a polymer.

**Comparative Example 2**

A polymer was prepared with reference to Korean Unexamined Patent Publication No. 10-2021-0037448. Specifically, the culture medium used was MR (Modified Riesenberg) medium supplemented with ampicillin at a concentration of 0.2 g/L. Specifically, a 5L fermenter (internal volume: 3L) was used, and the microorganism for fermentation used was the recombinant *E. coli,* which was produced by transforming XL1-Blue *E. coli* with a recombinant vector in which the RecC gene, which is a polyhydroxyalkanoate synthase (PHA synthase) derived from *Ralstonia eutropha,* and the mutant 540 (CPPCT_540) gene of propionyl-CoA transferase derived from *Clostridium propionicum,* were cloned into the pBLuescript II KS+ vector. The CPPCT_540 gene is an improved gene in which the base sequence was substituted so that valine, i.e., the 193rd amino acid, was expressed into alanin (V194A), and three silent mutations (T669C, A1125G, T1158C) having only DNA substitution were carried out without change of amino acids (WO 09/022797). Throughout the fermentation process, a feeding solution containing antibiotics and 700 g/L glucose was continuously added to the MR medium, and poly(3-hydroxypropionic acid) was produced by fermentation.

**Comparative Examples 3 to 5**

Poly(3-hydroxypropionic acid) was prepared by the same method as in Example 1, except that the reaction conditions were changed as shown in Table 1 below.

**Comparative Example 6**

15 g of 3-hydroxypropionic acid and 126.6 mg of p-toluenesulfonic acid(p-TSA) catalyst (0.4 mol% based on 3-hydroxypropionic acid) were charged into an oil bath reactor, and a solid state polymerization reaction was carried out at 90°C and 10 torr for 2 hours, followed by a solid state polymerization reaction at 110°C and 0.2 torr for 24 hours to obtain poly(3-hydroxypropionic acid).

**Comparative Example 7**

15 g of 3-hydroxypropionic acid and 64.02 mg of methanesulfonic acid (0.4 mol% based on 3-hydroxypropionic acid) were charged into an oil bath reactor, and a solid state polymerization reaction was carried out at 90°C and 10 torr for 2 hours, followed by a solid state polymerization reaction at 110°C and 0.2 torr for 24 hours to obtain poly(3-hydroxypropionic acid).

**Experimental Example**

The physical properties of the polymers prepared in Examples and Comparative Examples were evaluated by the following method.

**1) Weight average molecular weight and molecular weight distribution**

The weight average molecular weight, number average molecular weight and polydispersity index of the polymer in each step prepared in Examples and Comparative Examples were measured by a gel permeation chromatography (GPC, Waters Alliance e2695).

- Solvent: chloroform (eluent)
- Flow rate: 1.0 ml/min
- Column temperature: 40°C
- Standard: Polystyrene

**2) Analysis of vinyl group in end groups**

The ratio of a vinyl group to the total end groups was calculated through 1H-NMR measurement using Buker 500MHz NMR model equipment. Specifically, each polymer was dissolved in d-$CDCl_3$ at a concentration of 8 mg/ml and measured, and calculated using the following Mathematical Equation 1. However, if no measurement was performed, it was entered as '-'.

[Mathematical Equation 1]

$$vinyl\ group(\%) = \frac{2a}{(2a+b)} \times 100$$

in Mathematical Equation 1,

a is the area value of $^1H$ in C=C of 6.3 ppm,
b is the area value of $^2H$ in HO-$CH_2$- of 3.8 ppm.

**3) Measurement of nitrogen content**

Using an NSX N-Quant instrument, 10 mg of polymer sample was injected and burned at 800°C to analyze the nitrogen content. However, if no measurement was performed, it was entered as '-'.

**4) Measurement of YI (Yellow Index)**

A film with a thickness of 180 um was fabricated by using each sample. Each film was charged into a Nippon Denshoku (light source type: D65, viewing angle: 10°) and the YI was measured. However, if no measurement was performed, it was entered as '-'.

**5) Measurement of bio carbon content**

After the samples were pretreated to graphitize, the bio-derived carbon (radioisotope $^{14}C$) content of each sample was measured by using Accelerator Mass Spectrometry (AMS) according to ASTM D6866-22 test method.
The results are shown in Table 1 below.

[Table 1]

| | Step 1 | | Step 2 | Mn | Mw | PD I | Vinyl grou p cont ent (%) | Yiel d (%) | N cont ent (ppm w) | YI | Bio carb on cont ent (wt%) ) |
|---|---|---|---|---|---|---|---|---|---|---|---|
| | Catalyst (amount used ) | Temperature/pr essure/time (°C /torr/hr) | Temperature/ pressure/time (°C/torr/hr) | | | | | | | | |
| Example 1 | p-TSA (0.2 mol%) | 90/10/2 | 80/0.2/24 | 1380 0 | 277 00 | 2.0 1 | 5.7 | 88 | - | - | 100 |
| Example 2 | p-TSA (0.2 mol%) | 90/10/2 | 90/0.2/24 | 2230 0 | 372 00 | 1.6 7 | 33 | 90 | 29 | 14 .3 | 100 |
| Example 3 | p-TSA (0.2 mol%) | 90/10/2 | 100/0.2/24 | 2300 0 | 394 00 | 1.7 1 | 39 | 87 | - | - | 100 |
| Example 4 | p-TSA (0.4 mol%) | 90/10/2 | 90/0.2/24 | 1590 0 | 301 00 | 1.6 8 | 35 | 91 | - | - | 100 |
| Example 5 | p-XSA (0.4 mol%) | 90/10/2 | 90/0.2/24 | 1120 0 | 282 00 | 2.5 2 | 34 | 92 | - | - | 100 |
| Example 6 | MsOH (0.4 mol%) | 90/10/2 | 90/0.2/24 | 1000 0 | 300 00 | 2.8 0 | 35 | 93 | - | - | 100 |
| Example 7 | p-TSA (0.4 mol%) | 90/10/2 | 90/0.2/24 | 1270 0 | 326 39 | 2.5 7 | 39 | 85 | - | - | 100 |
| Example 8 | p-TSA (0.1 mol%) | 90/10/2 | 90/0.2/24 | 2550 0 | 554 00 | 2.1 7 | 32 | 85 | 28 | 12 .0 | 100 |
| Example 9 | p-TSA (0.05 mol%) | 90/10/2 | 90/0.2/24 | 1350 0 | 297 00 | 2.2 0 | 7 | 83 | - | - | 100 |
| Example 10 | p-TSA (0.2 mol%) | 90/10/2 | 90/3/24 | 8900 | 166 00 | 1.8 7 | 15 | 88 | - | - | 100 |
| Example 11 | p-TSA (0.2 mol%) | 70/10/2 | 70/0.2/60 | 2240 0 | 442 00 | 1.9 7 | 9.8 | - | - | 12 .0 | 100 |
| Example 12 | p-TSA (0.4 mol%) | 70/10/2 | 70/0.2/60 | 3210 0 | 554 00 | 1.7 2 | 11 | - | - | 12 .0 | 100 |
| Example 13 | MsOH (0.2 mol%) | 70/10/2 | 70/0.2/62 | 1980 0 | 384 00 | 1.9 3 | 5.7 | - | - | 10 .0 | 100 |
| Example 14 | MsOH (0.4 mol%) | 70/10/2 | 70/0.2/62 | 2110 0 | 430 44 | 2.0 4 | 8.9 | - | - | 11 .0 | 100 |
| Compar ative Example 1 | - | - | - | 2750 0 | 490 00 | 1.7 8 | 44 | 87 | 40 | 11 .8 | 0 |
| Compar ative Example 2 | - | - | - | - | - | - | - | 17 % | 5660 | 29 .7 | 100 |
| Compar ative Example 3 | p-TSA (0.4 mol%) $SnCl_2$ (0.1 mol%) | 90/10/2 | 110/0.2/6 | 1320 0 | 237 00 | 1.8 0 | 76 | 82 | - | - | 100 |
| Compar ative Example 4 | p-TSA (0.2 mol%) $SnCl_2$ (0.05 mol%) | 90/10/2 | 110/0.2/24 | 1020 0 | 265 00 | 2.5 9 | 69 | 82 | - | - | 100 |
| Compar ative Example 5 | p-TSA (0.4 mol%) $SnCl_2$ (0.1 mol%) | 80/10/2 | 80/0.2/24 | 7300 | 225 00 | 1.7 6 | 81 | 78 | - | - | 100 |
| Compar ative Example 6 | p-TSA (0.4 mol%) | 90/10/2 | 110/0.2/24 | 1090 0 | 301 00 | 3.5 0 | 76 | 80 | - | 18 .0 | 100 |

(continued)

| | Step 1 | | Step 2 | Mn | Mw | PD I | Vinyl grou p cont ent (%) | Yiel d (%) | N cont ent (ppm w) | YI | Bio carb on cont ent (wt%) ) |
|---|---|---|---|---|---|---|---|---|---|---|---|
| | Catalyst (amount used ) | Temperature/pr essure/time (°C /torr/hr) | Temperature/ pressure/time (°C/torr/hr) | | | | | | | | |
| Compar ative Example 7 | MsOH (0.4 mol%) | 90/10/2 | 110/0.2/24 | 1230 0 | 321 00 | 2.6 1 | 81 | 81 | - | 19 .0 | 100 |

Referring to Table 1, it was confirmed that Examples 1 to 14 had low vinyl group content of 40.0% or less while showing high molecular weight and yield, and also had low nitrogen content and YI. On the other hand, it was confirmed that Comparative Example 1 using β-propiolactone as a starting material had high vinyl group content but did not contain any biocarbon, Comparative Example 2 prepared by biosynthesis not only had low yield but also had significantly high nitrogen content and YI, and Comparative Examples 3, 4, 6 and 7, in which polymerization in Step 2 was carried out at a temperature of 110°C, and Comparative Example 5, in which the catalyst content exceeded 0.4 mol%, had high vinyl group content.

## Claims

1. A poly(3-hydroxypropionic acid) comprising a repeating unit represented by the following Chemical Formula 1, wherein the poly(3-hydroxypropionic acid) has a ratio of a vinyl group in end groups of 40 mol% or less:

[Chemical Formula 1]

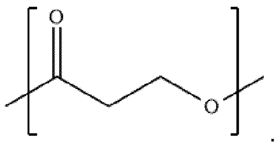

2. The poly(3-hydroxypropionic acid) according to claim 1, wherein the poly(3-hydroxypropionic acid) has a nitrogen content of 100 ppm or less.

3. The poly(3-hydroxypropionic acid) according to claim 1, wherein the poly(3-hydroxypropionic acid) has a YI (yellow index) value of 30 or less.

4. The poly(3-hydroxypropionic acid) according to claim 1, wherein the poly(3-hydroxypropionic acid) has a bio carbon content of 80 wt.% or more.

5. The poly(3-hydroxypropionic acid) according to claim 1, wherein the poly(3-hydroxypropionic acid) has a weight average molecular weight of 10,000 or more and 700,000 or less.

6. The poly(3-hydroxypropionic acid) according to claim 1, wherein the poly(3-hydroxypropionic acid) has a number average molecular weight of 7,000 or more and 500,000 or less.

7. The poly(3-hydroxypropionic acid) according to claim 1, wherein the poly(3-hydroxypropionic acid) has a molecular weight distribution (Mw/Mn) of 1.2 to 3.5.

8. A method for preparing a poly(3-hydroxypropionic acid), comprising:

   polymerizing 3-hydroxypropionic acid at a temperature of 100°C or less to prepare the poly(3-hydroxypropionic acid),
   wherein the poly(3-hydroxypropionic acid) has a ratio of a vinyl group in end groups of 40 mol% or less.

9. The method for preparing a poly(3-hydroxypropionic acid) according to claim 8, wherein the polymerization is a solid state polymerization carried out at a temperature of 70°C or less.

10. The method for preparing a poly(3-hydroxypropionic acid) according to claim 8,

    wherein the polymerization is carried out in the presence of a catalyst, and
    the catalyst is used in an amount of 0.4 mol% or less based on the 3-hydroxypropionic acid.

11. The method for preparing a poly(3-hydroxypropionic acid) according to claim 10,

wherein the catalyst is a sulfonic acid-based catalyst.

**12.** The method for preparing a poly(3-hydroxypropionic acid) according to claim 9,

wherein the solid state polymerization comprises,
(step 1) subjecting the 3-hydroxypropionic acid to solid state polymerization at a temperature of 70°C or less to prepare an oligomer; and
(step 2) subjecting the oligomer to solid state polymerization at a temperature of 70°C or less to prepare the poly(3-hydroxypropionic acid).

**13.** The method for preparing a poly(3-hydroxypropionic acid) according to claim 8,
wherein the 3-hydroxypropionic acid is dried, before the polymerizing the 3-hydroxypropionic acid at a temperature of 100°C or less to prepare the poly(3-hydroxypropionic acid).

**INTERNATIONAL SEARCH REPORT**

International application No.
**PCT/KR2024/000032**

**A. CLASSIFICATION OF SUBJECT MATTER**

**C08G 63/06**(2006.01)i; **C08G 63/78**(2006.01)i; **C08G 63/80**(2006.01)i; **C08G 63/82**(2006.01)i

According to International Patent Classification (IPC) or to both national classification and IPC

**B. FIELDS SEARCHED**

Minimum documentation searched (classification system followed by classification symbols)

C08G 63/06(2006.01); C07C 231/02(2006.01); C08G 63/08(2006.01); C08G 63/60(2006.01); C08G 63/78(2006.01); C08G 63/82(2006.01); C08G 63/91(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 말단기(terminal group), 비닐기(vinyl group), 폴리(3-하이드록시프로피온산)(poly(3-hydroxypropionic acid)), 중축합(polycondensation)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0039621 A (LG CHEM, LTD.) 29 March 2022 (2022-03-29)<br>See abstract; paragraphs [0017], [0021]-[0024], [0034]-[0038], [0042]-[0045] and [0059]-[0067]; and table 1. | 1-13 |
| A | WO 2022-235112 A1 (LG CHEM, LTD.) 10 November 2022 (2022-11-10)<br>See entire document. | 1-13 |
| A | KR 10-2021-0038251 A (LG CHEM, LTD.) 07 April 2021 (2021-04-07)<br>See entire document. | 1-13 |
| A | US 7714097 B2 (ZHANG, D. et al.) 11 May 2010 (2010-05-11)<br>See entire document. | 1-13 |
| A | US 2003-0144551 A1 (ZHONG, L. et al.) 31 July 2003 (2003-07-31)<br>See entire document. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/000032**

**C. DOCUMENTS CONSIDERED TO BE RELEVANT**

| Category* | Citation of document, with indication, where appropriate, of the relevant passages | Relevant to claim No. |
|---|---|---|
| PX | KR 10-2023-0020930 A (LG CHEM, LTD.) 13 February 2023 (2023-02-13)<br>See paragraphs [0120]-[0121], [0170] and [0177]-[0178]; and table 1. | 1,5-7 |

Form PCT/ISA/210 (second sheet) (July 2022)

**INTERNATIONAL SEARCH REPORT**
**Information on patent family members**

International application No.
**PCT/KR2024/000032**

| Patent document cited in search report | | | Publication date (day/month/year) | Patent family member(s) | | | Publication date (day/month/year) |
|---|---|---|---|---|---|---|---|
| KR | 10-2022-0039621 | A | 29 March 2022 | None | | | |
| WO | 2022-235112 | A1 | 10 November 2022 | EP | 4317244 | A1 | 07 February 2024 |
| KR | 10-2021-0038251 | A | 07 April 2021 | None | | | |
| US | 7714097 | B2 | 11 May 2010 | US | 2007-0083019 | A1 | 12 April 2007 |
| US | 2003-0144551 | A1 | 31 July 2003 | US | 2003-0158274 | A1 | 21 August 2003 |
| | | | | US | 2003-0158441 | A1 | 21 August 2003 |
| | | | | US | 2003-0162851 | A1 | 28 August 2003 |
| | | | | US | 2005-0101760 | A1 | 12 May 2005 |
| | | | | US | 2005-0182235 | A1 | 18 August 2005 |
| | | | | US | 6844447 | B2 | 18 January 2005 |
| | | | | US | 6897338 | B2 | 24 May 2005 |
| | | | | US | 6933404 | B2 | 23 August 2005 |
| | | | | US | 7001969 | B2 | 21 February 2006 |
| | | | | US | 7166743 | B2 | 23 January 2007 |
| | | | | US | 7230144 | B2 | 12 June 2007 |
| | | | | WO | 03-051813 | A1 | 26 June 2003 |
| KR | 10-2023-0020930 | A | 13 February 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230000713
- KR 1020230016271
- KR 1020230193117
- KR 1020210037448
- WO 09022797 A